(19) Europäisches Patentamt
European Patent Office
Office européen des brevets

(11) **EP 2 272 197 B1**

(12) **FASCICULE DE BREVET EUROPEEN**

(45) Date de publication et mention
de la délivrance du brevet:
**22.02.2012 Bulletin 2012/08**

(21) Numéro de dépôt: **09757372.9**

(22) Date de dépôt: **30.04.2009**

(51) Int Cl.:
*H04L 5/00* (2006.01)   *H04L 1/18* (2006.01)

(86) Numéro de dépôt international:
**PCT/EP2009/055246**

(87) Numéro de publication internationale:
**WO 2009/146989 (10.12.2009 Gazette 2009/50)**

(54) **SYSTÈME DE TÉLÉCOMMUNICATION MULTI-ACCÈS À STRATÉGIE DE RETRANSMISSION DE PAQUETS ADAPTÉE**

MEHRFACHZUGANGS-TELEKOMMUNIKATIONSSYSTEM MIT ANGEPASSTER PAKETNEUÜBERTRAGUNGSSTRATEGIE

MULTIPLE ACCESS TELECOMMUNICATION SYSTEM WITH ADAPTED PACKET-RETRANSMISSION STRATEGY

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **30.04.2008 FR 0852931**

(43) Date de publication de la demande:
**12.01.2011 Bulletin 2011/02**

(73) Titulaire: **Commissariat à l'Énergie Atomique et aux Énergies Alternatives
75015 Paris (FR)**

(72) Inventeurs:
• **CALVANESE STRINATI, Emilio
38000 Grenoble (FR)**
• **KTENAS, Dimitri
F-38600 Fontaine (FR)**

(74) Mandataire: **Ilgart, Jean-Christophe et al
BREVALEX
95 rue d'Amsterdam
75378 Paris Cedex 8 (FR)**

(56) Documents cités:
**EP-A- 1 798 926**

• **AL-RAWI M ET AL: "Opportunistic Uplilnk Scheduling for 3G LTE Systems" THE IEEE INTERNATIONAL CONFERENCE ON INNOVATIONS IN INFORMATION TECHNOLOGY, 18 novembre 2007 (2007-11-18), pages 705-709, XP031226586 ISBN: 978-1-4244-1840-4**
• **TSE D.; VISWANATH P.: 'Fundamentals of Wireless Communication', 11 Juillet 2005, CAMBRIDGE UNIVERSITY PRESS, NEW YORK, ISBN 9780521845274 * page 187 - page 188 ***

**Description**

## DOMAINE TECHNIQUE

La présente invention concerne le domaine des systèmes de télécommunication multi-accès et, plus particulièrement, les systèmes de télécommunication OFDMA (*Orthogonal Frequency Division Multiple Access*).

## ÉTAT DE LA TECHNIQUE ANTÉRIEURE

Les systèmes de télécommunication multi-accès permettent de partager une ressource de transmission entre différents utilisateurs de manière à fournir à chacun d'entre eux un canal de transmission distinct. On connaît notamment les techniques de TDMA (*Time Division Multiple Access*), FDMA (*Frequency Division Multiple Access*) et CDMA (*Code Division Multiple Access*) partageant la ressource de transmission en allouant respectivement aux différents utilisateurs des intervalles de temps, des fréquences/intervalles de fréquence, ou des codes d'accès. Il est également classique de combiner entre elles ces techniques de contrôle d'accès. Par exemple, un système OFDMA *(Orthogonal Frequency Division Multiplexing Access)* combine un accès par répartition de fréquences (FDMA) et un accès par répartition d'intervalles de temps (TDMA). Dans un tel système chaque utilisateur se voit attribuer dynamiquement pour chaque intervalle de temps un ensemble de sous-porteuses d'un multiplex OFDM sur lesquelles il peut transmettre ses données. Cette technique de contrôle d'accès est notamment utilisée dans la norme IEEE 802.16, communément désignée sous le nom de WiMAX.

Le partage de la ressource de transmission entre les différents utilisateurs relève de la couche de protocole MAC (*Medium Access Control*), sous-couche de la couche de liaison réalisant l'interface avec la couche physique. Dans le système OFDMA précité, la couche MAC attribue à chaque paquet de données à transmettre par un utilisateur pendant un intervalle de temps un ensemble de sous-porteuses. La couche MAC gère également la retransmission éventuelle de paquets perdus suite à des erreurs dues au canal de transmission. L'allocation dynamique de sous-porteuses (*Dynamic Sub-carrier Assignment*) et la retransmission de paquets sont effectuées par un algorithme connu sous l'expression d' « ordonnanceur de paquets » ou « *packet scheduler* » -voir EP 1 798 926 A (NTT DOCOMO INC).

L'allocation de fréquences dans un système OFDMA est capable de supporter différents types de qualité de service (QoS). Pour une qualité de service de type meilleur effort (Best Effort) la répartition de la ressource de transmission peut être équitable (*fair scheduling*) en assurant le même débit instantané aux différents utilisateurs, ou bien proportionnelle (*proportional fair scheduling*) en maximisant le débit instantané total des différents utilisateurs tout en garantissant un niveau minimal de service. Pour une qualité de service de type temps réel (c'est-à-dire à faible temps de latence) d'autres techniques d'allocation sont utilisées (MSR ou Maximum Stability Region) permettant de maximiser le débit d'un utilisateur en valeur moyenne.

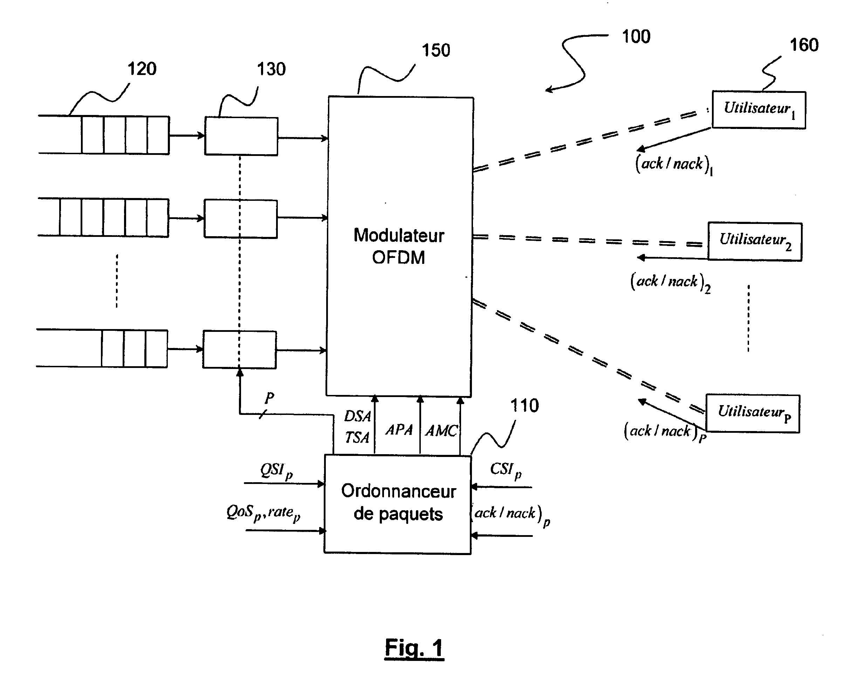

On a représenté schématiquement en Fig. 1 un système OFDMA comportant un émetteur 100 et une pluralité de terminaux récepteurs 160 associés à différents utilisateurs. L'émetteur comprend un modulateur OFDM 150 et un ordonnanceur de paquets 110. A chaque utilisateur $p=1,..., P$ correspond une file d'attente de paquets 120 et un buffer de transmission 130. L'ordonnanceur 110 effectue une allocation dynamique de ressources à chaque intervalle de temps de transmission (TTI), chaque intervalle étant divisé en une pluralité de temps symbole OFDM. Plus précisément, l'ordonnanceur 110 alloue dynamiquement à chacun des utilisateurs un sous-ensemble de porteuses et un sous-ensemble de temps symboles OFDM, en fonction de la qualité de service $QoS_p$, de la longueur de la file d'attente $QSI_p$ (*Queue State Information*) et, le cas échéant, du débit demandé $rate_p$ de chaque utilisateur. Outre l'allocation dynamique de sous-porteuses (DSA) et de temps symbole OFDM (TSA), l'ordonnanceur peut également contrôler la puissance envoyée sur chaque groupe de sous-porteuses (*Adaptive Power Allocation* ou APA) ainsi que le schéma de modulation et de codage MCS (*Modulation and Coding Scheme*) utilisé pour chaque sous-groupe (*Adaptive Modulation and Coding ou* AMC). Aux fins de l'allocation dynamique ou du contrôle de puissance/schéma MCS, l'ordonnanceur peut également prendre en compte l'information d'état du canal de chaque utilisateur $CSI_p$ (*Channel State Information*) représentant le coefficient d'atténuation complexe sur le canal.

A chaque intervalle de transmission, le modulateur 150 reçoit les paquets des différents utilisateurs et effectue une modulation OFDM de ces paquets, tenant compte des groupes de sous-porteuses, des sous-ensembles de temps symboles, des puissances et des schémas MCS alloués par l'ordonnanceur 110 aux différents utilisateurs.

Lorsqu'un paquet d'un utilisateur est transmis sur le canal de transmission, ce paquet n'est pas immédiatement purgé mais reste stocké dans le buffer de transmission en attente d'un acquittement positif (ACK) ou négatif (NACK) du récepteur. En cas d'acquittement négatif ou de défaut d'acquittement positif dans un certain délai l'émetteur retransmet le paquet selon un protocole dit ARQ (*Automatic Repeat reQuest*). Plusieurs types de protocoles ARQ sont connus de l'état de la technique notamment les protocoles Stop-and-Wait, Go-Back-N, SR-ARQ (*Selective Request ARQ*).

En règle générale, les paquets sont codés à l'aide d'un codage dit FEC (*Forward Error* Correction) pouvant prendre la forme d'un code de détection d'erreur (CRC) ou de correction d'erreur (ECC), avant d'être modulés et émis.

Si le récepteur détecte dans un paquet la présence d'une erreur qu'il ne peut corriger, il transmet un acquittement négatif (NACK) à l'émetteur. La combinaison d'un codage FEC et d'un protocole de retransmission ARQ est connue dans la littérature sous l'acronyme HARQ (*Hybrid ARQ*). Il existe actuellement plusieurs versions de protocole HARQ.

Dans la version la plus simple, dénommée HARQ Type I, lorsqu'une erreur ne peut être corrigée dans un paquet, une requête de retransmission du paquet erroné est envoyée à l'émetteur et une seconde tentative de transmission a lieu. En pratique le paquet erroné n'est pas supprimé mais est stocké dans un buffer de réception pour y être combiné (*Chase combining*) avec le bloc reçu à la seconde tentative. Le résultat de la combinaison est ensuite soumis au décodeur.

Une seconde version de protocole HARQ, dénommée HARQ Type II ou IR HARQ (*Incremental Redundancy HARQ*) permet de réduire la taille des paquets retransmis. Selon cette version, lors de la première transmission du paquet, le code est poinçonné de telle sorte que peu de bits de redondance sont transmis. Si le paquet reçu lors de la première transmission se révèle erroné et ne peut être corrigé à l'aide des bits de redondance disponibles, des bits de redondance supplémentaires, éliminés lors du poinçonnage, sont transmis en réponse à la première requête de retransmission. Le processus peut se répéter, les bits de redondance étant transmis de manière incrémentale, au fur et à mesure des demandes de retransmission, tant que le bloc erroné ne peut être corrigé.

Dans le contexte du système de télécommunication OFDMA de la Fig. 1, le protocole de retransmission de paquets de type ARQ ou HARQ est géré par l'ordonnanceur 110. Il reçoit les acquittements négatifs/positifs $(ack / nack)_p$ de chaque utilisateur $p$=1,.., $P$ et pour chaque paquet transmis. Si un paquet est perdu pour un utilisateur, il décide de sa retransmission selon un protocole ARQ.

Le système OFDMA décrit précédemment est satisfaisant pour des liaisons filaires mais peut présenter de sévères limitations pour des canaux radio sélectifs en fréquence. On entend ici par canal sélectif en fréquence, un canal présentant une largeur de bande de cohérence plus étroite que la bande passante du signal transmis. Dans le cas d'un tel canal, si un évanouissement concerne un groupe de sous-porteuses, les paquets modulés par ces sous-porteuses ont une probabilité élevée d'être perdus. Si une retransmission ARQ ou HARQ intervient lors de ce même évanouissement, les paquets retransmis risquent de subir le même sort. Ces retransmissions grèvent inutilement le budget énergétique de l'émetteur et se traduisent par une augmentation du temps de latence qui peut s'avérer incompatible avec une qualité de service de type temps réel.

Le but de la présente invention est par conséquent de proposer un système de télécommunication OFDMA capable de détecter et de remédier à la survenance d'un évanouissement sélectif en fréquence sans augmentation de la dépense énergétique de l'émetteur ni du temps de latence des paquets.

## EXPOSÉ DE L'INVENTION

La présente invention est définie par un système de télécommunication OFDMA sans fil comprenant un émetteur adapté à transmettre, au moyen d'un modulateur OFDM, une pluralité de paquets de données à destination de récepteurs d'une pluralité d'utilisateurs, via une même pluralité de canaux de transmission, le canal de transmission d'un utilisateur étant associé à un groupe de sous-porteuses du multiplex OFDM, et à un ensemble de temps symbole OFDM d'un intervalle de transmission. Chaque récepteur est adapté à signaler à l'émetteur la perte d'un paquet transmis sur le canal de transmission de l'utilisateur correspondant. Ledit émetteur comprend en outre un ordonnanceur de paquets adapté à contrôler la retransmission de chaque paquet ainsi perdu au moyen dudit modulateur. Chaque récepteur comprend des moyens de détection d'une situation de coupure du canal de transmission de l'utilisateur correspondant, ladite situation de coupure étant signalée au dit émetteur au moyen d'une information de coupure (OUTAGE/NOUTAGE), et, en cas de coupure ledit ordonnanceur interdit toute retransmission d'un paquet perdu sur ledit canal pendant un temps prédéterminé ($T_{out}$) supérieur ou égal au temps de cohérence dudit canal.

Selon une première variante de réalisation, ledit ordonnanceur autorise la retransmission du paquet perdu sur ledit canal de transmission au terme dudit temps prédéterminé.

Selon une seconde variante de réalisation, dans une situation de coupure, ledit ordonnanceur alloue au dit utilisateur un second canal associé à un second groupe de sous-porteuses distinct de celui du canal en situation de coupure, et au dit ensemble de temps symbole OFDM.

Selon une troisième variante de réalisation, dans une situation de coupure, si le paquet perdu correspond à un flux temps réel, ledit ordonnanceur alloue au dit utilisateur un second canal associé à un second groupe de sous-porteuses distinct de celui du canal en situation de coupure ainsi qu'au dit ensemble de temps symbole OFDM, et, sinon, ledit ordonnanceur autorise la retransmission du paquet perdu sur ledit canal en situation de coupure au terme dudit temps prédéterminé.

Selon une quatrième variante de réalisation, dans une situation de coupure, si le paquet perdu possède une valeur TTL inférieure à un seuil prédéterminé, ledit ordonnanceur alloue au dit utilisateur un second canal associé à un second groupe de sous-porteuses distinct de celui du canal en situation de coupure ainsi qu'au dit ensemble de temps symbole OFDM, et, sinon, ledit ordonnanceur autorise la retransmission du paquet perdu sur ledit canal en situation de coupure au terme dudit temps prédéterminé.

Avantageusement, lesdits moyens de détection de coupure détectent une coupure du canal lorsque l'information mutuelle instantanée de ce canal est inférieure au débit binaire à transmettre sur ce canal.

Selon un premier exemple de réalisation, lesdits moyens de détection de coupure estiment l'information mutuelle instantanée à partir de :

$$I_{inst} = \frac{\gamma}{n_t n_c} \sum_{j=1}^{n_t} \sum_{i=1}^{n_c} \left| h_{ij} \right|^2$$

où $\gamma$ est le rapport signal à bruit sur le canal, $n_c$ et $n_t$ sont respectivement le nombre de sous-porteuses et le nombre de temps symbole OFDM alloués à l'utilisateur par intervalle de transmission, $h_{ij}$, $i = 1, .. n_c$, $j = 1, .. , n_t$, sont les coefficients d'atténuation du canal de transmission affectant les différentes sous-porteuses pendant les différents temps symbole OFDM.

Selon un second exemple de réalisation, lesdits moyens de détection de coupure estiment l'information mutuelle instantanée à partir de :

$$I_{inst} = \frac{1}{n_t n_c} \sum_{j=1}^{n_t} \sum_{i=1}^{n_c} I_{ij}$$

avec

$$I_{ij} = \log Q - \frac{1}{Q} \sum_{k=1}^{Q} E_z \left\{ \log \left( \sum_{q=1}^{Q} \exp \left[ -\frac{\left| h_{ij} a_k + z - h_{ij} a_q \right|^2 - |z|^2}{2\sigma^2} \right] \right) \right\}$$

où les $a_q = 1 .. , Q$ sont les symboles de l'alphabet de modulation utilisés pour moduler les sous-porteuses, $n_c$ et $n_t$ sont respectivement le nombre de sous-porteuses et le nombre de temps symbole OFDM alloués à l'utilisateur par intervalle de transmission, $h_{ij}$, $i = 1, .. n_c$, $j = 1, .. , n_t$, sont les coefficients d'atténuation du canal de transmission affectant les différentes sous-porteuses pendant les différents temps symbole OFDM, $z = N(0, \sigma^2)$ la variable aléatoire décrivant le bruit et $E_z(.)$ est l'espérance sur les échantillons de bruit.

Avantageusement, ledit temps de cohérence du canal est déterminé à partir d'une estimation du décalage Doppler affectant ledit canal.

**BRÈVE DESCRIPTION DES DESSINS**

D'autres caractéristiques et avantages de l'invention apparaîtront à la lecture d'un mode de réalisation préférentiel de l'invention fait en référence aux figures jointes parmi lesquelles :

La Fig. 1 représente de manière schématique un système de télécommunication OFDMA connu de l'état de la technique ;
La Fig. 2 représente de manière schématique un système de télécommunication OFDMA selon un mode de réalisation de l'invention ;
La Fig. 3 représente de manière schématique la structure d'un récepteur pour le système de télécommunication OFDMA de la Fig. 2.

**EXPOSÉ DÉTAILLÉ DE MODES DE RÉALISATION PARTICULIERS**

Une première idée à la base de l'invention est de permettre au système OFDMA de diagnostiquer une situation de coupure au sens de la théorie de l'information. Une seconde idée à la base de l'invention est d'interdire la retransmission de paquets dans un canal de transmission affecté par une situation de coupure pendant un temps supérieur ou égal au temps de cohérence de ce canal.

On considère comme précédemment un système OFDMA sans fil où chaque utilisateur se voit allouer à chaque intervalle de transmission (TTI), un groupe de sous-porteuses et un sous-ensemble de temps symbole OFDM, pour transmettre un paquet de données. L'intervalle de transmission peut être égal à un ou plusieurs temps symboles OFDM (typiquement 7 ou 14 symboles OFDM). Le canal de transmission utilisé par le signal OFDM est un canal radio.

De manière générale, un canal radio n'est pas ergodique mais peut être modélisé sous la forme d'un canal à évanouissements par blocs (*block fading channel*). Dans le cas d'une transmission radio de type OFDM, un bloc pourra être défini par un intervalle temporel et un groupe de sous-porteuses, généralement contiguës. A chaque bloc correspond une instance du canal généralement caractérisée par la valeur complexe d'un coefficient d'atténuation. Les coefficients d'atténuation des différents blocs peuvent être considérés comme les résultats de tirages d'une variable aléatoire.

La capacité au sens de Shannon, exprimée comme moyenne de l'information mutuelle sur toutes les instances du canal, n'est pas une grandeur pertinente pour caractériser un canal non ergodique. Comme exposé dans l'article d'E. Biglieri et al. intitulé « Fading channels : information-theoretic and communication aspects » publié dans IEEE Trans. on Information Theory, vol. 44, n° 6, Oct. 1998, pages 2619-2692, il est alors préférable de caractériser ce canal par une probabilité de coupure (*outage probability*). Il y a coupure lorsque la capacité associée à l'instance du canal est inférieure au taux de transmission binaire de la source.

La probabilité de coupure dépend du rapport signal à bruit $\gamma$ et du taux binaire de transmission $R$ de la source, soit :

$$P_{out}(\gamma, R) = \Pr\big(I(X, Y) < R\big) \qquad (1)$$

La probabilité de coupure peut être considérée comme la probabilité que l'information mutuelle « instantanée » du canal, vue par un paquet, soit inférieure au taux binaire de transmission. Si celle-ci est inférieure à ce taux, il ne sera pas possible de corriger les erreurs affectant un paquet. En revanche, en faisant un parallèle avec le théorème fondamental de Shannon, dès lors que l'information mutuelle « instantanée » du canal est supérieure à ce taux, il sera toujours possible d'utiliser un code correcteur permettant de transmettre les données avec une probabilité d'erreur arbitrairement faible.

On considère à nouveau le cas du système OFDMA précité et plus particulièrement du canal de transmission d'un utilisateur associé à un groupe de $n_c$ sous-porteuses et un sous-ensemble de temps symbole OFDM pendant un intervalle de transmission. On supposera pour simplifier que le groupe de sous-porteuses est identique pour lesdits différents temps symbole OFDM. Toutefois, des groupes de sous-porteuses différents peuvent être alloués pour les différents temps symbole sans sortir du cadre de la présente invention.

L'information mutuelle « instantanée » du canal, c'est-à-dire, « observée » pour la transmission du paquet, peut être évaluée au moyen de :

$$I_{inst} = \frac{1}{n_t n_c} \sum_{j=1}^{n_t} \sum_{i=1}^{n_c} I_{ij} \qquad (2)$$

où $I_{ij}$ est l'information mutuelle moyenne calculée pour la porteuse $i$ pendant le $j^{\text{ième}}$ temps symbole *OFDM, $n_t$* est le nombre de symboles OFDM pendant cet intervalle (avec $n_t \geq 1$). Le comportement du canal sur une porteuse peut être considéré, au coefficient d'atténuation complexe près, comme étant de type BBAG (c'est-à-dire à Bruit Blanc Additif Gaussien).

On suppose que les symboles d'un paquet de données modulant les $n_c$ sous-porteuses appartiennent à un alphabet $Q$-aire. Le récepteur connaît au moyen d'un estimateur de canal les coefficients complexes d'atténuation $h_{ij}$ affectant les différentes sous-porteuses lors de la transmission du $j^{\text{ième}}$ temps symbole OFDM. Généralement, l'estimateur de canal effectue une estimation de certains coefficients complexes d'atténuation en différents instants de l'intervalle de transmission et pour différentes sous-porteuses, les autres coefficients étant déterminés par interpolation temporelle et/ou fréquentielle.

L'estimateur de canal peut classiquement utiliser la détection de symboles pilotes distribués sur les sous-porteuses dans la trame de symboles OFDM. Alternativement, l'estimateur de canal peut être du type aidé par décision (*decision aided channel estimation*) de manière connue en soi.

La détection des symboles pilote permet par ailleurs d'obtenir une estimation de la variance de bruit $\sigma^2$. On peut montrer que l'information mutuelle moyenne $I_{ij}$ s'exprime alors par :

$$I_{ij} = \log Q - \frac{1}{Q}\sum_{k=1}^{Q} E_z \left\{ \log\left( \sum_{q=1}^{Q} \exp\left[ -\frac{\left|h_{ij}a_k + z - h_{ij}a_q\right|^2 - |z|^2}{2\sigma^2} \right] \right) \right\}$$

$$(3)$$

où les $a_q$= 1,..,$Q$ sont les symboles de l'alphabet de modulation modulant les sous-porteuses pendant le temps symbole OFDM considéré, $z=N(0,\sigma^2)$ est la variable aléatoire décrivant le bruit sur la sous-porteuse et $E_z$(.) est l'espérance sur les échantillons de bruit.

Au lieu d'estimer l'information mutuelle « instantanée » du canal à partir de (2) et (3), il est possible de l'évaluer empiriquement de manière approchée par :

$$I_{inst} = \frac{\gamma}{n_t n_c}\sum_{j=1}^{n_t}\sum_{i=1}^{n_c} \left|h_{ij}\right|^2 \qquad (4)$$

Comme déjà indiqué plus haut si $I_{inst}$, telle qu'obtenue par (2) et (3), ou (4) est inférieure au débit de transmission $R$ de l'utilisateur, le canal sera en situation de coupure et les erreurs affectant les données d'un paquet ne seront pas en mesure d'être toutes corrigées.

Le récepteur peut calculer la valeur $I_{inst}$ au moyen d'une table de look-up à partir des valeurs $\gamma$, $n_c$, $n_t$ et $h_{ij}$, $i$ = 1,..., $n_c$, $j$ = 1,..., $n_t$ et la comparer avec le débit pour diagnostiquer une situation de coupure (outage). Si une situation de coupure est détectée, il en avertit l'émetteur, par exemple à l'aide d'un bit de signalisation. Le récepteur envoie en fait deux bits sur la liaison de retour, un premier bit ACK/NACK d'acquittement positif ou négatif de bonne réception du paquet et un second bit OUTAGE/NOUTAGE indiquant, en cas d'acquittement négatif, si la mauvaise réception du paquet est due à une situation de coupure du canal.

Les bits ACK/NACK et OUTAGE/NOUTAGE renvoyés par chaque récepteur sont utilisés par l'ordonnanceur de l'émetteur OFDMA pour la gestion de la retransmission des paquets. Plus précisément, si une situation de coupure est détectée pour le canal de transmission d'un utilisateur, l'ordonnanceur interdira toute transmission ou retransmission de paquet sur un canal qui avait été alloué à l'utilisateur, pendant un temps $T_{ou}t$ supérieur ou égal au temps de cohérence du canal $T_{coh}$. En effet, une transmission/retransmission de paquet pendant ce temps de cohérence aurait une probabilité élevée de donner à nouveau lieu à une perte du paquet.

Le temps de cohérence du canal $T_{coh}$ peut être obtenu de différentes manières. Par exemple, il peut être estimé à partir du décalage Doppler $f_d$ subi par le signal radio au moyen de :

$$T_{coh} = \frac{1}{\pi\sqrt{2}f_d} \qquad (5)$$

Le décalage Doppler pourra être obtenu comme indiqué dans l'article de N. Maeda et al. intitulé « Experimental Evaluation of Throughput Performance in Packet Wireless Access Based on VSF-OFDM and VSD-CDMA », IEEE PIRMC '03, c'est-à-dire à partir d'une corrélation entre symboles pilotes d'une même porteuse appartenant à des symboles OFDM successifs. Alternativement, le temps de cohérence pourra être obtenu à partir de la fonction de corrélation cyclique du signal OFDM reçu sur le canal de transmission (voie montante ou descendante). Dans le cas où le canal de transmission est de type FDD (*Frequency Division Duplex*) c'est-à-dire si la voie montante et la voie descendante utilisent des fréquences porteuses différentes, on déduira simplement le décalage Doppler de l'une par rapport au décalage Doppler de l'autre.

On suppose que l'émetteur OFDMA a reçu un acquittement négatif de réception pour un paquet transmis sur le canal de transmission d'un utilisateur. Le canal de transmission est associé à un premier groupe de sous-porteuses.

Selon une première variante, si l'ordonnanceur est averti d'une situation de coupure (OUTAGE) du canal de transmission, il interdit toute retransmission de paquet sur ledit canal pendant le temps $T_{out}$ et alloue à l'utilisateur en question, pour le même sous-ensemble de temps symbole OFDM précédemment alloué, un second groupe de sous-porteuses distinct du premier pour la retransmission du paquet perdu, par exemple lors de l'intervalle de transmission (TTI) suivant. Au bout du temps $T_{out}$ le premier groupe de sous-porteuses est à nouveau disponible pour être alloué au dit utilisateur (pour le même sous-ensemble de temps symbole OFDM). On notera qu'entre temps le premier groupe de sous-porteuses pourra être alloué à un autre utilisateur dans la mesure où les canaux de transmission des différents utilisateurs sont distincts.

Selon une seconde variante, si l'ordonnanceur est averti d'une situation de coupure du canal de transmission, il inhibe comme précédemment toute retransmission du paquet perdu sur le canal pendant le temps $T_{out}$ mais autorise une retransmission du paquet perdu à terme. Cette seconde variante permet comme la première d'éviter toute retransmission vouée à l'échec mais introduit un temps de latence supplémentaire.

L'ordonnanceur peut opter pour la première ou la seconde variante en fonction du caractère temps réel de la qualité de service demandée et/ou de la durée de vie ou TTL (*Time To Live*) du paquet à transmettre, c'est-à-dire du temps maximum autorisé pour qu'il soit délivré et, le cas échéant décodé, à destination.

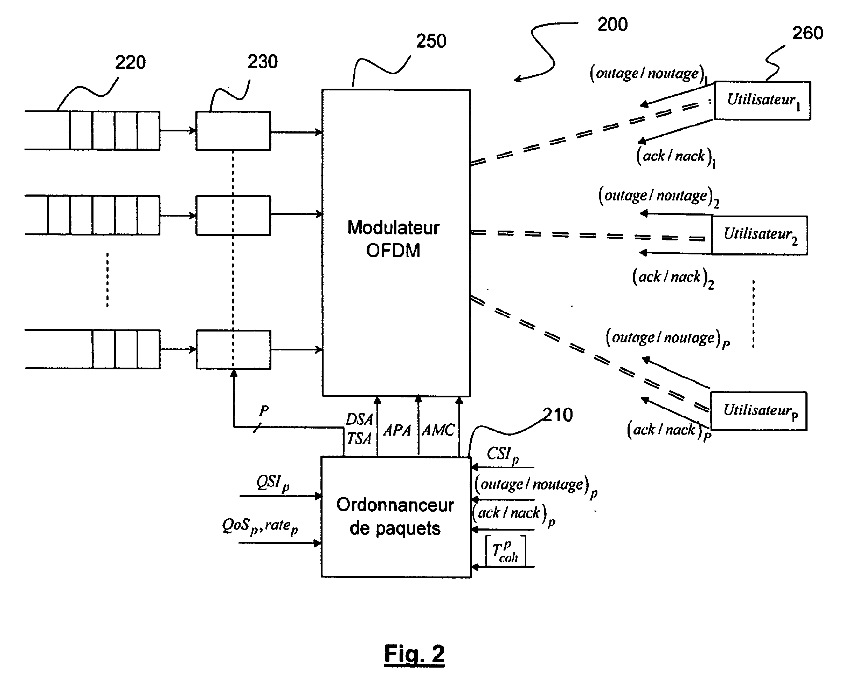

La Fig. 2 représente schématiquement un système de télécommunication OFDMA 200 selon un mode de réalisation de l'invention. Les références représentant des entités identiques à celle de la Fig. 1 sont augmentées de 100.

A la différence du système OFDMA de l'état de la technique, l'ordonnanceur de paquets 210 reçoit de chaque utilisateur $p$ un bit (*outage/noutage*)$_p$ indiquant si le canal de transmission de cet utilisateur est ou non en situation de coupure. La situation de coupure est détectée en comparant l'information mutuelle instantanée $I_{inst}^p$ de ce canal au débit binaire demandé $R^p$, sachant que si $I_{inst}^p < R^p$ une coupure est diagnostiquée.

En cas de perte de paquet sur le canal d'un utilisateur $p$, indiquée par le bit (*ack/nack*)$_p$, l'ordonnanceur 210 décide, en fonction de la valeur du bit (*outage/noutage*)$_p$, si une retransmission du paquet perdu peut être effectuée sur le canal. Selon la première variante précitée, l'ordonnanceur procède à une réallocation immédiate de ressources, en l'occurrence alloue un nouveau groupe de sous-porteuses pour le même sous-ensemble de temps symbole OFDM précédemment alloué à l'utilisateur, alors que dans la seconde variante, l'ordonnanceur suspend toute retransmission sur le canal pendant un temps supérieur ou égal au temps de cohérence du canal $T_{coh}^p$.

L'estimation du temps de cohérence $T_{coh}^p$ est effectuée soit par le terminal de l'utilisateur $p$ à partir du signal transmis sur la liaison descendante, soit par la station de base à partir du signal transmis sur la liaison montante. Dans le premier cas l'information de temps de cohérence est transmise par une voie de retour de l'utilisateur comme (*ack/nack*)$_p$ et (*outage/noutage*)$_p$.

L'ordonnanceur 210 peut optionnellement contrôler la puissance transmise sur chaque sous porteuse ou groupe de sous-porteuses (*APA*) et le schéma de modulation et de codage (*AMC*) en fonction de l'état de canal de transmission donné par l'information d'état du canal $CSI_p$. Ce contrôle n'est toutefois effectué que pour les canaux qui ne sont pas en situation de coupure.

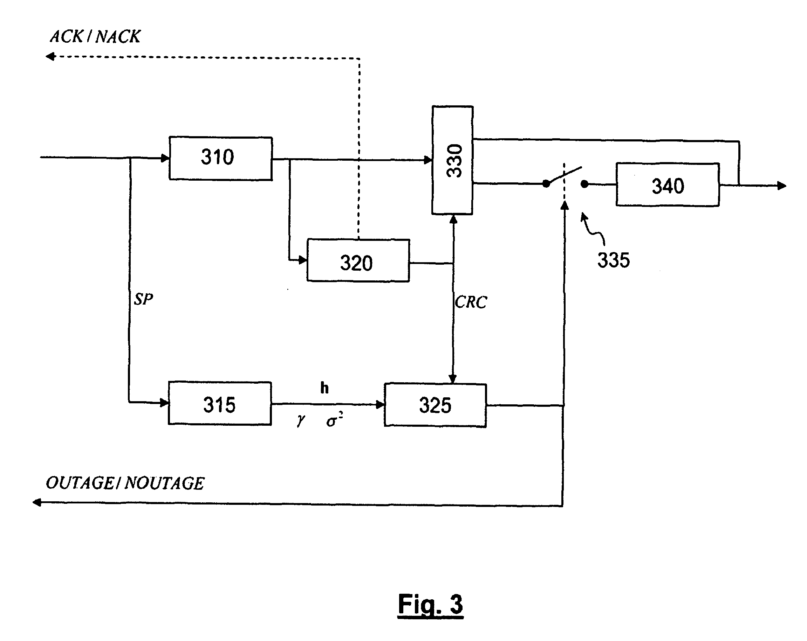

La Fig. 3 représente schématiquement la structure d'un récepteur pour un système de télécommunication OFDMA selon un mode de réalisation de l'invention.

Les symboles OFDM reçus par le récepteur sont démodulés dans le démodulateur 310. Le ou les mots de codes constituant le paquet de données sont ensuite soumis à des moyens de calcul de CRC 320. Ces moyens déterminent si le paquet est erroné et transmettent cette information au multiplexeur 330 ainsi qu'aux moyens de détection de coupure de canal 325. Si le paquet est dépourvu d'erreur, il est transmis directement sur la sortie. Sinon, il est transmis aux moyens de commutation 335. Les moyens de calcul 320 informent également par un signal *ACK / NACK* sur la voie de retour si le paquet reçu est erroné ou non.

L'estimateur de canal 315 estime les coefficients d'atténuation $h_{ij}$ des différentes sous-porteuses à partir des symboles pilotes *SP* et les transmet aux moyens de détection de coupure 325. Ces derniers reçoivent également de l'estimateur de canal, l'estimation du rapport signal à bruit $\gamma$ et/ou de la puissance de bruit $\sigma^2$ et calculent à l'aide des expressions (2) et (3) ou bien (4) l'information mutuelle « instantanée » $I_{inst}$.

La puissance de bruit $\sigma^2$ peut être déterminée par l'estimateur de canal à l'aide des symboles pilote reçus et des symboles pilote correspondants non bruités. Si les $\mathbf{p_i}$ représentent les symboles pilote émis et $\mathbf{\hat{H}_i}$ une estimation

des coefficients du canal, les échantillons de bruit, et donc leur variance pourront être déterminés par exemple à partir de $\hat{z}_i = y_i - H_i p_i$ où $y_i$ sont les signaux reçus correspondants. En pratique, on peut simplement estimer la distance des signaux reçus, après égalisation, aux points de la constellation de modulation et déduire de cette distance la variance de bruit.

Le rapport signal à bruit peut s'obtenir également de manière classique en fonction du taux d'erreur binaire au moyen d'abaques (dans une table de look-up) $BER = f(S/N)$.

Les moyens 325 connaissent également le schéma MCS utilisé à l'émission (par exemple au moyen d'un canal de signalisation) et en déduisent le taux binaire de transmission $R$.

Les moyens 330 testent si $R > I_{inst}$ et en avertissent l'émetteur par le signal *OUTAGE/NOUTAGE.* Ce même signal commande les moyens de commutation 335. Selon que le canal est en situation de coupure ou non, les moyens de commutation inhibent ou transmettent le paquet erroné au décodeur ECC 340. L'opération de décodage ne sera ainsi pas effectuée inutilement, puisqu'en situation de coupure, cette dernière serait vouée à l'échec.

## Revendications

1. Système de télécommunication OFDMA sans fil comprenant un émetteur (200) adapté à transmettre, au moyen d'un modulateur OFDM (250), une pluralité de paquets de données à destination de récepteurs (260) d'une pluralité d'utilisateurs, via une même pluralité de canaux de transmission, le canal de transmission d'un utilisateur étant associé à un groupe de sous-porteuses du multiplex OFDM, et un ensemble de temps symbole OFDM d'un intervalle de transmission, chaque récepteur étant adapté à signaler à l'émetteur la perte d'un paquet transmis sur le canal de transmission de l'utilisateur correspondant, ledit émetteur comprenant en outre un ordonnanceur de paquets (210) adapté à contrôler la retransmission de chaque paquet ainsi perdu au moyen dudit modulateur (250), **caractérisé en ce que** chaque récepteur comprend des moyens de détection (325) d'une situation de coupure du canal de transmission de l'utilisateur correspondant, lesdits moyens de détection de coupure détectent une coupure de canal lorsque l'information mutuelle instantanée de ce canal est inférieure au débit binaire à transmettre sur ce canal, ladite situation de coupure étant signalée au dit émetteur au moyen d'une information de coupure (OUTAGE/NOUTAGE), et qu'en cas de coupure ledit ordonnanceur interdit toute retransmission d'un paquet perdu sur ledit canal pendant un temps prédéterminé, $T_{out}$, supérieur ou égal au temps de cohérence dudit canal.

2. Système de télécommunication OFDMA selon la revendication 1, **caractérisé en ce qu'**en cas de coupure, ledit ordonnanceur autorise la retransmission du paquet perdu sur ledit canal de transmission au terme dudit temps prédéterminé.

3. Système de télécommunication OFDMA selon la revendication 1, **caractérisé en ce qu'**en cas de coupure, ledit ordonnanceur alloue au dit utilisateur un second canal associé à un second groupe de sous-porteuses distinct de celui du canal en situation de coupure, et au dit ensemble de temps symbole OFDM.

4. Système de télécommunication OFDMA selon la revendication 1, **caractérisé en ce qu'**en situation de coupure, si le paquet perdu correspond à un flux temps réel, ledit ordonnanceur alloue au dit utilisateur un second canal associé à un second groupe de sous-porteuses distinct de celui du canal en situation de coupure ainsi qu'au dit ensemble de temps symbole OFDM, et, sinon, ledit ordonnanceur autorise la retransmission du paquet perdu sur ledit canal en situation de coupure au terme dudit temps prédéterminé.

5. Système de télécommunication OFDMA selon la revendication 1, **caractérisé en ce qu'**en situation de coupure, si le paquet perdu possède une durée de vie inférieure à un seuil prédéterminé, ledit ordonnanceur alloue au dit utilisateur un second canal associé à un second groupe de sous-porteuses distinct de celui du canal en situation de coupure ainsi qu'au dit ensemble de temps symbole OFDM, et, sinon, ledit ordonnanceur autorise la retransmission du paquet perdu sur ledit canal en situation de coupure au terme dudit temps prédéterminé.

6. Système de télécommunication OFDMA selon la revendication 1, **caractérisé en ce que** lesdits moyens de détection de coupure estiment l'information mutuelle instantanée à partir de :

$$I_{inst} = \frac{\gamma}{n_t n_c} \sum_{j=1}^{n_t} \sum_{i=1}^{n_c} \left| h_{ij} \right|^2$$

où $\gamma$ est le rapport signal à bruit sur le canal, $n_c$ et $n_t$ sont respectivement le nombre de sous-porteuses et le nombre de temps symbole OFDM alloués à l'utilisateur par intervalle de transmission, $h_{ij}$, $i=1,..n_c$, $j = 1,..,n_t$, sont les coefficients d'atténuation du canal de transmission affectant les différentes sous-porteuses pendant les différents temps symbole OFDM.

7. Système de télécommunication OFDMA selon la revendication 1, **caractérisé en ce que** lesdits moyens de détection de coupure estiment l'information mutuelle instantanée à partir de :

$$I_{inst} = \frac{1}{n_t n_c} \sum_{j=1}^{n_t} \sum_{i=1}^{n_c} I_{ij}$$

avec

$$I_{ij} = \log Q - \frac{1}{Q} \sum_{k=1}^{Q} E_z \left\{ \log \left( \sum_{q=1}^{Q} \exp \left[ -\frac{\left| h_{ij} a_k + z - h_{ij} a_q \right|^2 - |z|^2}{2\sigma^2} \right] \right) \right\}$$

où les $a_q$=1,..,$Q$ sont les symboles de l'alphabet de modulation utilisés pour moduler les sous-porteuses, $n_c$ et $n_t$ sont respectivement le nombre de sous-porteuses et le nombre de temps symbole OFDM alloués à l'utilisateur par intervalle de transmission, $h_{ij}$, $i = 1,..n_c$, $j = 1,..,n_t$, sont les coefficients d'atténuation du canal de transmission affectant les différentes sous-porteuses pendant les différents temps symbole OFDM, $z = N(0,\sigma^2)$ la variable aléatoire décrivant le bruit et $E_z(.)$ est l'espérance sur les échantillons de bruit.

8. Système de télécommunication OFDMA selon l'une des revendications précédentes, **caractérisé en ce que** ledit temps de cohérence du canal est déterminé à partir d'une estimation du décalage Doppler affectant ledit canal.

**Claims**

1. A wireless OFDMA telecommunications system comprising a transmitter (200) adapted to transmit, by means of a OFDM modulator (250), a plurality of data packets destined for receivers (260) of a plurality of users, via the same plurality of transmission channels, the transmission channel of a user being associated with a group of sub-carriers of the OFDM multiplex, and a set of OFDM symbol times of a transmission interval, each receiver being adapted to signal to the transmitter the loss of a packet transmitted over the transmission channel of the corresponding user, said transmitter further comprising a packet scheduler (210) adapted to control retransmission of each packet lost by means of said modulator (250), **characterised in that** each receiver comprises detection means (325) of an outage situation of the transmission channel of the corresponding user, said outage detection means detecting an outage situation of the channel if the instantaneous mutual information of this channel lies below the binary rate to be transmitted over this channel, said outage situation being signalled to said transmitter by means of outage information (OUTAGE/NOUTAGE), and **in that** in the event of outage, said scheduler prohibits any retransmission of a packet lost over said channel during a predetermined time, $T_{out}$, greater than or equal to the coherence time of said channel.

2. The OFDMA telecommunications system as claimed in Claim 1, **characterised in that** in the event of outage, said scheduler authorises retransmission of the packet lost over said transmission channel at the end of said predetermined time.

3. The OFDMA telecommunications system as claimed in Claim 1, **characterised in that** in the event of outage, said scheduler allocates to said user a second channel associated with a second group of sub-carriers distinct from that of the channel in an outage situation, and to said set of OFDM symbol times.

4. The OFDMA telecommunications system as claimed in Claim 1, **characterised in that** in an outage situation, if the packet lost corresponds to a real time flux, said scheduler allocates to said user a second channel associated with a second group of sub-carriers distinct from that of the channel in an outage situation as well as with said set of OFDM symbol times, and, if not, said scheduler authorises retransmission of the packet lost over said channel in an outage situation after said predetermined time.

5. The OFDMA telecommunications system as claimed in Claim 1, **characterised in that** in an outage situation, if the packet lost has a time to live less than a predetermined threshold, said scheduler allocates to said user a second channel associated with a second group of sub-carriers distinct from that of the channel in an outage situation as well as with said set of OFDM symbol times, and, if not, said scheduler authorises retransmission of the packet lost over said channel in an outage situation after said predetermined time.

6. The OFDMA telecommunications system as claimed in Claim 1, **characterised in that** said outage detection means estimate the instantaneous mutual information from:

$$I_{inst} = \frac{\gamma}{n_t n_c} \sum_{j=1}^{n_t} \sum_{i=1}^{n_c} \left| h_{ij} \right|^2$$

where $\gamma$ is the signal-to-noise ratio over the channel, $n_c$ and $n_t$ are respectively the number of sub-carriers and the number of OFDM symbol times allocated to the user per transmission interval, $h_{ij}$, $i = 1,..n_c$, $j=1,..,n_t$ are the attenuation coefficients of the transmission channel affecting the different sub-carriers during the different OFDM symbol times.

7. The OFDMA telecommunications system as claimed in Claim 1, **characterised in that** said outage detection means estimate the instantaneous mutual information from:

$$I_{inst} = \frac{1}{n_t n_c} \sum_{j=1}^{n_t} \sum_{i=1}^{n_c} I_{ij}$$

with

$$I_{ij} = \log Q - \frac{1}{Q} \sum_{k=1}^{Q} E_z \left\{ \log \left( \sum_{q=1}^{Q} \exp \left[ -\frac{\left| h_{ij} a_k + z - h_{ij} a_q \right|^2 - |z|^2}{2\sigma^2} \right] \right) \right\}$$

where the $a_q = 1,.,,Q$ are the symbols of the modulation alphabet used to modulate the sub-carriers, $n_c$ and $n_t$ are respectively the number of sub-carriers and the number of OFDM symbol times allocated to the user per transmission interval, $h_{ij}$, $i = 1,..n_c$, $j = 1,..,n_t$, are the attenuation coefficients of the transmission channel affecting the different sub-carriers during the different OFDM symbol times, $z = N(0,\sigma^2)$ the random variable describing noise and $E_z(.)$ is the expectancy on the noise samples.

8. The OFDMA telecommunications system as claimed in any one of the preceding claims, **characterised in that** said coherence time of the channel is determined from an estimation of the Doppler offset affecting said channel.

**Patentansprüche**

1. Drahtloses OFDMA-Telekommunikationssystem, umfassend einen Sender (200), der dazu ausgelegt ist, mittels eines OFDM- Modulators (250) eine Mehrzahl von Datenpaketen, die für Empfänger (260) einer Mehrzahl von Benutzern bestimmt sind, über ein und dieselbe Mehrzahl von Übertragungskanälen zu übertragen, wobei der Übertragungskanal eines Benutzers einer Gruppe von Unterträgern des OFDM-Multiplex und einer Gruppe von OFDM-Symbolzeiten eines Übertragungsintervalls zugeordnet ist, wobei jeder Empfänger dazu ausgelegt ist, dem Sender den Verlust eines Pakets mitzuteilen, das auf dem Übertragungskanal des entsprechenden Benutzers übertragen wurde, wobei der Sender ferner eine Paketsteuerungseinheit (210) umfasst, die dazu ausgelegt ist, die erneute Übertragung jedes derart verlorenen Pakets mit Hilfe des Modulators (250) zu steuern, **dadurch gekennzeichnet, dass** jeder Empfänger Mittel (325) zur Erfassung einer Situation der Unterbrechung des Übertragungskanals des entsprechenden Benutzers umfasst, wobei die Unterbrechungserfassungsmittel eine Unterbrechung des Kanals erfassen, wenn die instantane gegenseitige Information dieses Kanals geringer als die auf diesem Kanal zu übertragene binäre Rate ist, wobei die Unterbrechungssituation dem Sender mit Hilfe einer Unterbrechungsinformation (OUTAGE/NOUTAGE) mitgeteilt wird, und dass die Steuerungseinheit im Fall einer Unterbrechung jede erneute Übertragung eines verlorenen Pakets auf dem Kanal während einer vorbestimmten Zeit $T_{out}$, verbietet, die größer oder gleich der Kohärenzzeit des Kanals ist.

2. OFDMA-Telekommunikationssystem nach Anspruch 1, **dadurch gekennzeichnet, dass** im Fall einer Unterbrechung die Steuerungseinheit die erneute Übertragung des verlorenen Pakets auf dem Übertragungskanal nach Ablauf der vorbestimmten Zeit erlaubt.

3. OFDMA- Telekommunikationssystem nach Anspruch 1, **dadurch gekennzeichnet, dass** im Fall einer Unterbrechung die Steuerungseinheit dem Benutzer einen zweiten Kanal zuweist, der einer zweiten Gruppe von Unterträger zugeordnet ist, welche von jener des Kanals verschieden ist, der sich in der Unterbrechungssituation befindet, sowie der Gruppe von OFDM-Symbolzeiten.

4. OFDMA-Telekommunikationssystem nach Anspruch 1, **dadurch gekennzeichnet, dass** im Fall einer Unterbrechung, wenn das verlorene Paket einem Echtzeitfluss entspricht, die Steuerungseinheit dem Benutzer einen zweiten Kanal zuweist, der einer zweiten Gruppe von Unterträgern zugeordnet ist, welche von jener des Kanals verschieden ist, der sich in der Unterbrechungssituation befindet, sowie der Gruppe von OFDM-.Symbolzeiten, und dass andernfalls die Steuerungseinheit die erneute Aussendung des verlorenen Pakets auf dem Kanal, der sich in der Unterbrechungssituation befindet, nach Ablauf der vorbestimmten Zeit erlaubt.

5. OFDMA-Telekommunikationssystem nach Anspruch 1, **dadurch gekennzeichnet, dass** in einer Unterbrechungssituation, wenn das verlorene Paket eine Lebensdauer kleiner als eine vorbestimmte Schwelle besitzt, die Steuerungseinheit dem Benutzer einen zweiten Kanal zuweist, der einer zweiten Gruppe von Unterträgern zugeordnet ist, welche von jener des Kanals verschieden ist, der sich in der Unterbrechungssituation befindet, sowie der Gruppe von OFDM-Symbolzeiten, und dass andernfalls die Steuerungseinheit die erneute Aussendung des verlorenen Pakets auf dem Kanal, der sich in der Unterbrechungssituation befindet, nach Ablauf der vorbestimmten Zeit erlaubt.

6. OFDMA-Telekommunikationssystem nach Anspruch 1, **dadurch gekennzeichnet, dass** die Unterbrechungserfassungsmittel die instantane gegenseitige Information abschätzen ausgehend von:

$$I_{inst} = \frac{\gamma}{n_t n_c} \sum_{j=1}^{n_t} \sum_{i=1}^{n_c} \left| h_{ij} \right|^2$$

wobei $\gamma$ das Signal/Rausch-Verhältnis auf dem Kanal ist, $n_c$ und $n_t$ die Zahl von Unterträgern bzw. die Zahl von OFDM-Symbolzeiten sind, die dem Benutzer pro Übertragungsintervall zugewiesen sind, $h_{ij}$, $i = 1,..n_c$, $j = 1,..,n_t$, die Dämpfungskoeffizienten des Übertragungskanals sind, die die verschiedenen Unterträger während der verschiedenen OFDM-Symbolzeiten betreffen.

**7.** OFDMA-Telekommunikationssystem nach Anspruch 1, **dadurch gekennzeichnet, dass** die Unterbrechungserfassungsmittel die instantane gegenseitige Information abschätzen ausgehend von:

$$I_{inst} = \frac{1}{n_t n_c} \sum_{j=1}^{n_t} \sum_{i=1}^{n_c} I_{ij}$$

mit

$$I_{ij} = \log Q - \frac{1}{Q} \sum_{k=1}^{Q} E_z \left\{ \log \left( \sum_{q=1}^{Q} \exp \left[ -\frac{\left|h_{ij}a_k + z - h_{ij}a_q\right|^2 - |z|^2}{2\sigma^2} \right] \right) \right\}$$

wobei die $a_q = 1,..,Q$ die Symbole des Modulationsalphabets sind, die zur Modulierung der Unterträger verwendet werden, $n_c$ und $n_t$ die Zahl von Unterträgern bzw. die Zahl von OFDM-Symbolzeiten sind, die dem Benutzer pro Übertragungsintervall zugewiesen sind, $h_{ij}$, $i = 1,..n_c$, $j = 1,..,n_t$, die Dämpfungskoeffizienten des Übertragungskanals sind, die die verschiedenen Unterträger während der verschiedenen OFDM-Symbolzeiten betreffen, $z = N(0,\sigma^2)$ die Zufallsvariable ist, die das Rauschen beschreibt, und $E_z(.)$ der Erwartungswert der Rauschabtastwerte ist.

**8.** OFDMA-Telekommunikationssystem nach einem der vorhergehenden Ansprüche, **dadurch gekennzeichnet, dass** die Kohärenzzeit des Kanals ausgehend von einer Abschätzung der Doppler-Verschiebung bestimmt ist, die den Kanal betrifft.

**Fig. 1**

EP 2 272 197 B1

**Fig. 2**

**Fig. 3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1798926 A

**Littérature non-brevet citée dans la description**

- **E. BIGLIERI et al.** Fading channels : information-theoretic and communication aspects. *IEEE Trans. on Information Theory,* Octobre 1998, vol. 44 (6), 2619-2692

- **N. MAEDA et al.** Experimental Evaluation of Throughput Performance in Packet Wireless Access Based on VSF-OFDM and VSD-CDMA. *IEEE PIRMC '03*